**Europäisches Patentamt**

**European Patent Office**

**Office européen des brevets**

(19)

(11) Veröffentlichungsnummer: **0 110 944**
**B1**

(12) # EUROPÄISCHE PATENTSCHRIFT

(45) Veröffentlichungstag der Patentschrift:
20.05.87

(51) Int. Cl.⁴: **B 65 G 67/62,** B 65 G 21/18,
B 65 G 21/14

(21) Anmeldenummer: **83901812.4**

(22) Anmeldetag: **09.06.83**

(86) Internationale Anmeldenummer:
**PCT/DE 83/00106**

(87) Internationale Veröffentlichungsnummer:
**WO 83/04405 (22.12.83 Gazette 83/29)**

(54) **VORRICHTUNG ZUM BE- UND ENTLADEN, INSBESONDERE VON SCHIFFEN, MIT STÜCK- UND/ODER SCHÜTTGUT.**

(30) Priorität: **09.06.82 DE 3221726**

(43) Veröffentlichungstag der Anmeldung:
**20.06.84 Patentblatt 84/25**

(45) Bekanntmachung des Hinweises auf die Patenterteilung:
**20.05.87 Patentblatt 87/21**

(84) Benannte Vertragsstaaten:
**AT BE FR GB NL SE**

(56) Entgegenhaltungen:
**DE-U-8 119 173**

(73) Patentinhaber: **VIBRAMEC- MANUMECO S.A., 1, Rue de Guebwiller, F-68 260 Kingersheim (FR)**

(72) Erfinder: **ARNEMANN, Gerhard, Am Kroenrey 11, D-2083 Halstenbek (DE)**

(74) Vertreter: **Richter, Werdermann & Gerbaulet, Neuer Wall 10, D-2000 Hamburg 36 (DE)**

## Beschreibung

Die Erfindung betrifft eine Vorrichtung zum Be- und Entladen, insbesondere von Schiffen mit Stück- und/oder Schüttgut, bestehend aus zwei in einem senkrechten Trägergestell wendelförmig, als über Leitrollen geführte endlose Förderbänder ausgebildete und übereinanderliegend angeordnete Förderer, von denen der eine Förderer feststehend zwischen dem Trägergestell und einem mittigen, zylindrischen Tragstab angeordnet ist, während der andere Förderer durch Drehen um die senkrechte Trägergestelllängsachse ein- und ausfahrbar ausgebildet ist, wobei der um seine senkrechte Wendellängsachse verdrehbare förderer in einem unterhalb des Trägergestells liegenden Tragkorb angeordnet ist und für eine Aufwärtsbewegung mit seinem dem Ende des Förderers zugekehrten oberen Ende abschnittsweise das untere Ende des feststehenden Förderers übergreift (DE-U- 81 191 73).

Eine Vorrichtung zum Be- und Entladen, insbesondere von Schiffen mit Stück- und/oder Schüttgut ist nach der DE-A-12 90 875 bekannt. Bei dieser Be- und Entladevorrichtung liegt der verdrehbare Förderer auf dem feststehenden Förderer, so daß eine Aufwärtsförderung ohne zusätzliche Einrichtungen möglich ist. Dagegen müssen für eine Abwärtsförderung zusätzliche Einrichtungen, wie Überleitwalzen, vorgesehen sein, damit das Transportgut von dem feststehenden Förderer auf den ein- und ausfahrbaren Förderer übergeleitet werden kann, da das obere Ende dieses Förderers den feststehenden Förderer übergreift, so daß durch die entstehende Stufe das abwärts zu Transportierendechne Hilfseinrichtung nicht über die Stufe hinweg transportiert werden kann. Hinzu kommt noch, daß vermittels dieser Vorrichtung kein Beladen von Schiffen mit Schüttgut möglich ist, da das Schüttgut bei einer Abwärtsförderung nicht mittels der Überleitwalzen auf den anderen Förderer im Überleitbereich des einen Förderers auf den anderen Förderer angehoben werden kann. Auch die Verwendung von Überleitblechen anstelle von Überleitwalzen führt nicht zu dem gewünschten Erfolg, da es sich gezeigt hat, daß es dann im Bereich des Überleitbleches zu Materialstauungen kommt, wodurch keine störungsfreie Abwärtsförderung möglich ist.

Durch die DE-U-81 191 73 ist eine Gutübergabeeinrichtung zum Be- und Entladen von Großraumtransportmitteln, wie Schiffen od.dgl., mittels eines mit Gutbe- und Entladeeinrichtungen verbundenen senkrechten gewendelten Kurvenförderers, bei dem das zu fördernde Gut auf einem an dessen unterem Endabschnitt angeordneten verschwenk- und gegebenenfalls teleskopierbaren Horizontalförderer abgegeben bzw. von diesem aufgenommen wird, bekannt. Bei dieser Gutübergabeeinrichtung steht der Horizontalförderer gutübergabeseitig mit einer als Wendelförderersegment ausgebildeten Gutübergabewendel in Wirkverbindung, die synchron mit dem Horizontalförderer oberhalb oder unterhalb des unteren Wendelförderersegmentes beim Schwenken des Horizontalförderers verschiebbar und mittels einer Umsteuereinrichtung relativ zum unteren Wendelförderersegment anhebbar oder absenkbar ist. Es soll somit eine Gutübergabeeinrichtung geschaffen werden, die es ermöglicht, mit einem Senkrechtförderer Großraumtransportmittel sowohl zu beladen als auch zu entladen, ohne daß Behinderungen des Guttransportes durch einen Gutstau auftreten oder aber besondere manuelle Tätigkeiten nach einer Umkehr der Gutfördereinrichtung erforderlich sind.

Diese Gutübergabeeinrichtung weist jedoch eine relativ aufwendige konstruktive Ausgestaltung insofern auf, als bei dieser Gutübergabeeinrichtung die Gutübergabewendel in einem zum Senkrechtförderer verschieblichen Rahmen gelagert ist, der auf einer Grundplatte sich abstützt, an der der Horizontalförderer befestigt ist und die horizontal drehbar und vertikal verschieblich ist. Das horizontale Verdrehen der Grundplatte erfolgt mittels eines Antriebsmotors. Diese Grundplatte ist mittig mit einer mittels eines Stellmotors vertikal verschieblichen Hubsäule fest verbunden, an der vertikal wendelförmige Führungsglieder ausgebildet sind, die mit einem Führungsstück in Wirkeingriff bringbar sind. Der bodenseitige Rahmen ist dabei zum eigentlichen Rahmen des Senkrechtförderers räumlich veränderbar. Doch ist der Horizontalförderer an dieser Grundplatte angelenkt, wobei der Horizontalförderer auch bei Betätigung des hydraulischen Stellantriebes um ein Gelenk vertikal verschiebbar ist. Wesentlich ist ferner bei dieser bekannten Gutübergabeeinrichtung, daß die Grundplatte mittig mit der Hubsäule fest verbunden ist, die über die Höhe der Gutübergabewendel sich erstreckende Führungsschienen aufweist, die innerhalb des Halterohres befindlich sind. Diese Führungsschienen sind schraubenförmig gewendelt und zueinander gleichsinnig versetzt angeordnet. Zum Be- und Entladen ist es bei dieser Gutübergabeeinrichtung bei einer Umkehr vom Beladen zum Entladen oder umgekehrt erforderlich, die Gutübergabewendel so in Bezug auf das untere Wendelförderersegment anzuordnen, daß kein Güterstau auftreten kann. Hierzu wird bei einer zu erfolgenden Umsteuerung des Ladevorganges die Gutübergabewendel soweit aus dem Bereich des unteren Wendelförderersegmentes herausgedreht, daß sich der obere Endabschnitt der Gutübergabewendel unterhalb des unteren Endabschnittes des unteren Wendelförderersegmentes befindet. Durch einen Versatz um 120° ist dabei gewährleistet, daß beim Wiederhochdrehen des Rahmens mit der Gutübergabewendel diese sich in vorbestimmter Weise oberhalb oder unterhalb des unteren Wendelförderersegmentes befindet.

Die Erfindung löst die Aufgabe, eine Vorrichtung zum Be- und Entladen, insbesondere von Schiffen mit Stückgütern oder Schüttgütern zu schaffen, mit der ein kontinuierlicher Transport sowohl von Schüttgütern als auch von Stückgütern sowohl aufwärts als auch abwärts, ohne daß es hierzu zusätzlicher Einrichtungen bedarf, um das Transportgut von dem einen Förderer auf den anderen Förderer überzuleiten, und auch ein Verlegen der Abgabeseite des Wendelförderers in eine andere Abgaberichtung und ferner ein Verstellen der Länge der Förderbahn des Senkrechtförderers möglich ist.

Zur Lösung dieser Aufgabe wird eine Vorrichtung zum Be- und Entladen, insbesondere von Schiffen mit Stück- und/ oder Schüttgut der gattungsgemäßen Art vorgeschlagen, die erfindungsgemäß in der Weise ausgebildet ist, daß der Tragkorb am bodenseitigen Ende eines im bodenseitigen Bereich des zylindrischen Tragstabes des Trägergestells gehaltenen, ein- und ausfahrbaren Tragstababschnittes drehbar um die Tragstablängsachse gelagert ist und mit dem Förderer vermittels einer Kugeldrehverbindungseinrichtung an einer am bodenseitigen Ende des ein- und ausfahrbaren Tragstababschnittes befestigten Führungsplatte gehalten ist, und daß nach dem Verdrehen des Tragkorbes um etwa 360° das obere Ende des mit dem Tragkorb zusammen verdrehbaren Förderers unterhalb des unteren Endes des feststehenden Förderers für eine Abwärtsförderung liegt.

Mit einer derartig ausgebildeten Vorrichtung ist es möglich, Schiffe sowohl mit Schüttgut als auch mit Stückgut zu beladen und zu entladen, ohne daß es hierzu zusätzlicher Einrichtungen bedarf, um das Transportgut von dem einen Förderer auf den anderen Förderer überzuleiten. Für die Abwärtsförderung nimmt der Förderer in dem Tragkorb eine Stellung ein, bei der das obere Ende des in dem Tragkorb angeordneten Förderers unterhalb des unteren Endes des feststehenden Förderers zu liegen kommt, so daß nicht nur Stückgut, sondern auch Schüttgut von dem feststehenden Förderer auf den in dem verdrehbaren Tragkorb angeordneten Förderer überleitbar ist. Für eine Aufwärtsförderung dagegen wird der Tragkorb mit seinem Förderer lediglich soweit verdreht, bis das obere Ende des in dem Tragkorb gehaltenen Förderers das untere Ende des in dem Trägergestell feststehend angeordneten Förderers übergreift, so daß nach erfolgter Umkehrung der Umlaufrichtungen der beiden Förderer Stückgut und auch Schüttgut dem Laderaum eines Schiffes entnommen und zu einer höheren Abgabestelle aufwärts förderbar ist, so daß es auch für diese Aufwärtsförderung im Übergabebereich des einen Förderers zum anderen Förderer keiner zusätzlichen Einrichtungen bedarf.

Hinzu kommt noch als weiterer Vorteil, daß durch die Möglichkeit des Verdrehens des Tragkorbes mit seinem Förderer das bodenseitige Ende des Förderers in jede gewünschte Abgabe- bzw. Aufnahmestellung verschwenkbar ist.

Nach einem weiteren Merkmal der Erfindung weist der Förderer in dem Tragkorb gegenüber dem feststehenden Förderer eine kurze Wendellänge auf. Des weiteren ist der senkrechte Tragstab des Trägergestells mit einem Abschnitt über das Trägergestell hinaus verlängert ausgebildet, wobei der feststehende Förderer bis zum freien Ende des Tragstabes geführt ist.

Wird der um die Tragstablängsachse verdrehbare Tragkorb mit seinem Förderer mit dem aus dem Tragstab des Trägergestells ein- und ausfahrbaren Tragstababschnitt verriegelt, so können Höhenunterschiede durch das schraubgewindeartige Verdrehen des Tragstababschnittes des Tragstabes ausgeglichen und überbrückt werden. Außerdem ist noch besonders vorteilhaft, daß der verdrehbare Förderer in die jeweilige Transportrichtungsstellung verschwenkbar ist, ohne daß der Förderer aus der senkrechten Führung herausgenommen werden muß.

Im folgenden wird der Gegenstand der Erfindung in den Zeichnungen erläutert. Es zeigt

Fig. 1 schematisch in einer Seitenansicht eine Vorrichtung mit zwei wendelförmigen Förderern in der Stellung für eine Abwärtsförderung,

Fig. 2 schematisch in einer Seitenansicht die Vorrichtung in der Stellung der beiden wendelförmigen Förderer für eine Aufwärtsförderung,

Fig. 3 eine schaubildliche Teilansicht der beiden übereinandergreifenden Enden der beiden Förderer für die Abwärtsförderung, und

Fig. 4 in einer schaubildlichen Teilansicht die beiden übereinandergreifenden Enden der beiden Förderer für eine Aufwärtsförderung.

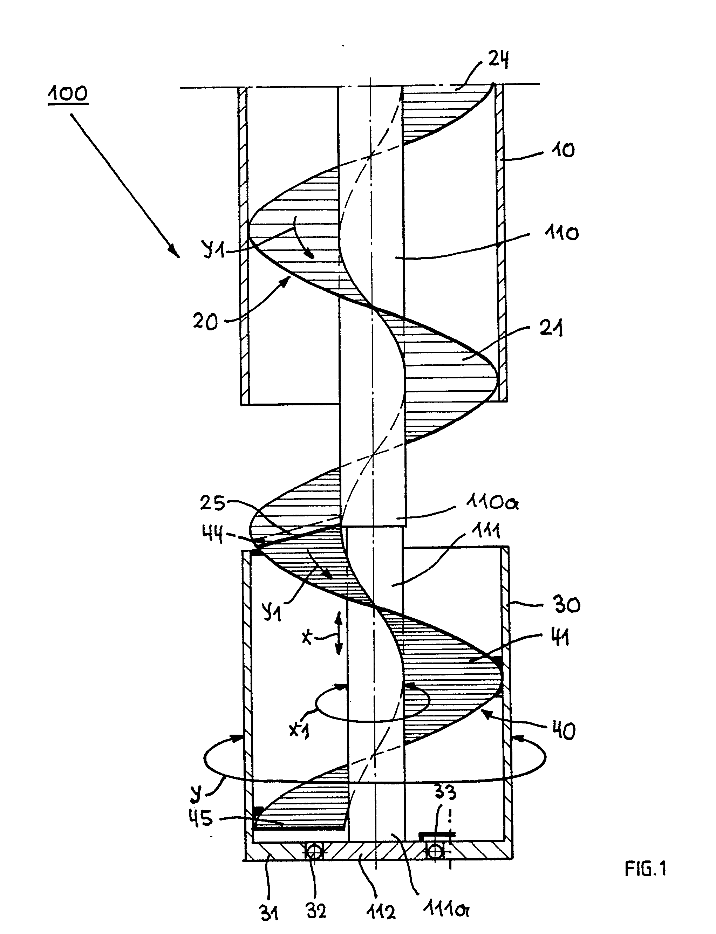

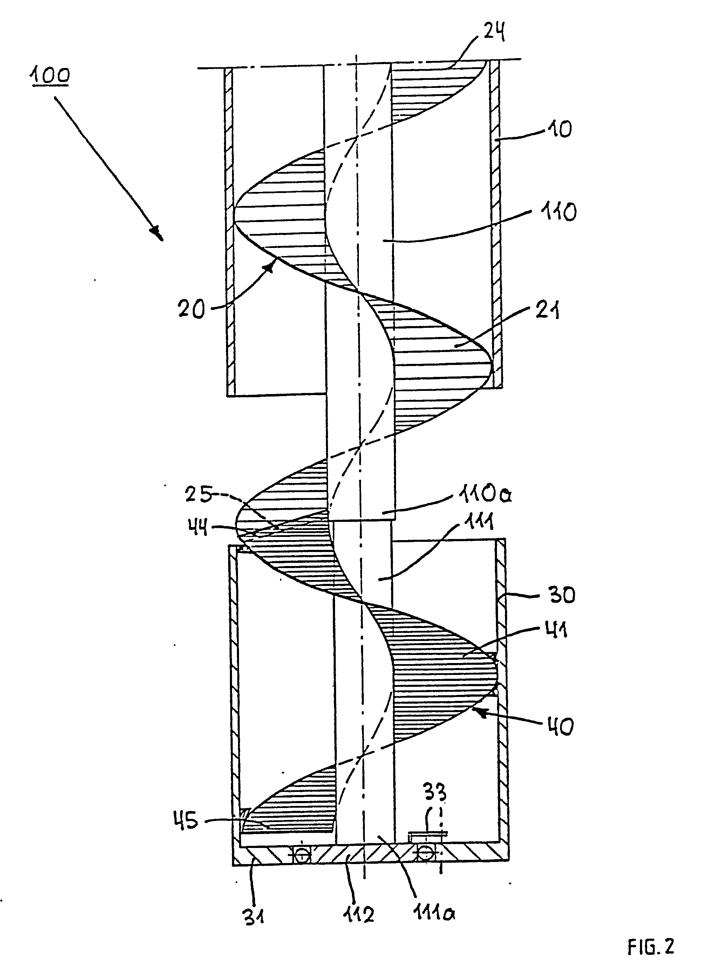

Gemäß Fig. 1 und 2 besteht die Be- und Entladevorrichtung 100, insbesondere für Schiffe, aus einem senkrechten Trägergestell 10 mit einem mittig in diesem angeordneten zylindrischen, rohrförmigen Tragstab 110, der mit einem ein- und ausfahrbaren Tragstababschnitt 111 versehen ist. Dieser in Pfeilrichtung X ein- und ausfahrbare Tragstababschnitt 111 ist im Innenraum des Tragstabes 110 geführt und steht mit einer in der Zeichnung nicht dargestellten Antriebseinrichtung in Verbindung, die z.B. als Hubzylinder ausgebildet sein kann. Es besteht jedoch auch die Möglichkeit, den Tragstababschnitt 111 mit einer schraubenlinienförmigen Profilierung zu versehen, die in eine entsprechend profilierte schraubenlinienförmige Führung an der Innenwand des zylindrischen Tragstabes 110 geführt ist, so daß durch Verdrehen des Tragstababschnittes 111 in Pfeilrichtung XI der Tragstabschnitt 111 spindelartig angehoben und abgesenkt werden kann.

Das Trägergestell 10 kann an einem in der Zeichnung nicht dargestellten Auslegerarm befestigt sein, der an einem verfahrbaren Portal mit einer Drehsäule heb- und senkbar befestigt ist, wobei vorzugsweise ein Parallelgestänge vorgesehen ist, damit das Trägergestell 10 bei einem Abheben oder Absenken des Auslegerarmes immer eine senkrechte Stellung einnimmt. Dieser Auslegerarm nimmt ein in der Zeichnung nicht dargestelltes Transportband auf, dem verschiedene Zuführ- bzw. Ableitbänder vorgeschaltet sein können, um das über die Vorrichtung 100 zu transportierende Gut zu- und abführen zu können.

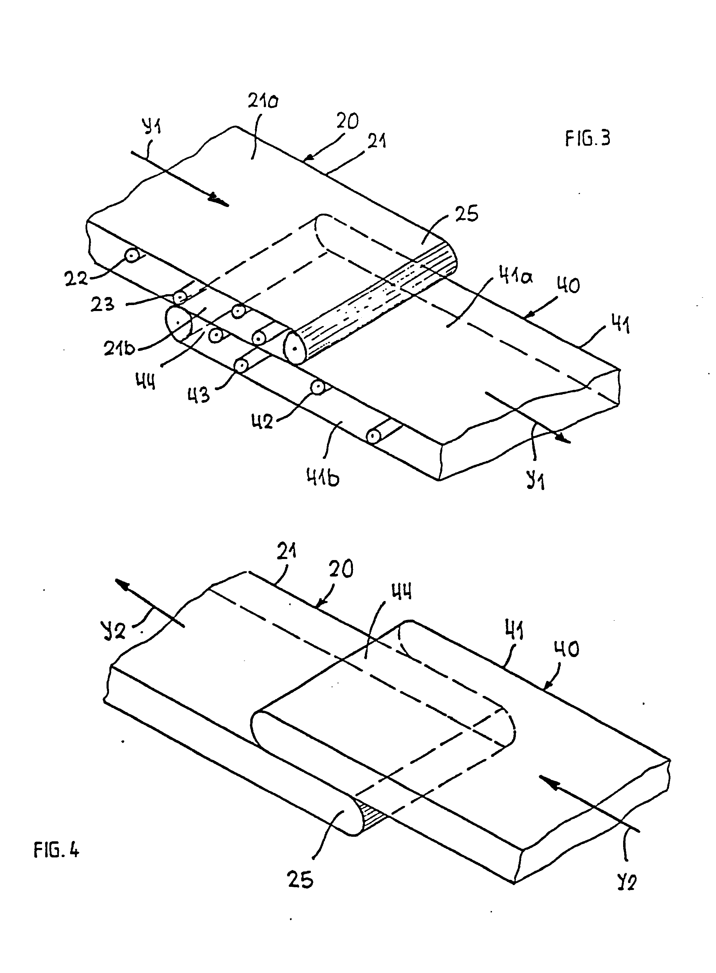

Das Trägergestell 10 nimmt einen feststehenden wendelförmigen Förderer 20 auf, der aus einem um den zylindrischen Tragstab 110 des Trägergestells 10 wendelförmig herumgeführten endlosen Förderband 21 mit dem oberen Trum 21a und dem unteren Trum 21b besteht (Fig. 1 und 3). Das wendelförmige Förderband 21 ist über Leitrollen und Antriebstrommeln 22, 23 geführt, die entsprechend der Wendelung des Förderbandes 36 an dem Tragstab 110 und an dem Trägergestell 10 freiliegend gelagert sind. Die Rollen 22, 23 sind vorzugsweise in Richtung des Tragstabes 110 konisch verjüngt ausgebildet. Die Umlenkrollen, um die das Förderband 21 herumgeführt ist, sind als Antriebsrollen ausgebildet und stehen mit einem vorzugsweise innerhalb des Tragstabes 110 angeordneten, in der Zeichnung nicht dargestellten Antriebsmotor in Verbindung. Es besteht jedoch auch die Möglichkeit, entweder nur die obere Bandumlenktrommel oder nur die untere Bandumlenktrommel oder auch beide Bandumlenktrommeln anzutreiben. Die Drehrichtung des Antriebsmotors für die Antriebstrommeln für das Förderband 21 ist wechselbar, so daß das Förderband in beiden Richtungen fördern kann. Anstelle eines eines über Leitrollen geführten Förderbandes kann auch ein wendelförmig ausgebildeter Schleifgurt verwendet werden, der dann über in entsprechender Weise an dem Trägergestell 10 vorgesehene Führungsflächen geführt ist.

Um eine sichere Führung des Förderbandes 21 zu gewährleisten, sind die Ränder des Förderbandes 21 in an der Innenwand des Trägergestells 10 angebrachten, in der Zeichnung nicht dargestellten Führungsschienen gleitend geführt. Die Randabschnitte des Förderbandes 21 tragen entsprechend ausgebildete Profilierungen, die in vorzugsweise etwa U-förmig ausgebildete Führungen des Trägergestells 10 eingreifen. Die Profilierungen können auf den Randabschnitt des Förderbandes 21 aufgesetzt oder an das Band angeformt sein. Die Profilierungen an der Innenwand des Trägergestells 10 und die Gegenprofile an dem Förderband 21 können jedoch auch anders ausgebildet sein. Der dem Tragstab 110 zugekehrte Rand des Förderbandes 21 kann zusätzlich mit einem Profil versehen sein, das in einer benachbart zum oberen Trum 21a des Förderbandes 21 verlaufenden und an der Außenwand des Tragstabes 110 angebrachten Führungsschiene geführt ist. Das Förderband 21 ist somit in seinem dem Tragstab 110 zugekehrten Bandabschnitt nur in seinem oberen Trum 21a und auf der dem Trägergestell 10 zugekehrten Seite im oberen und unteren Trum 21a, 21b geführt, so daß eine sichere Führung des wendelförmig ausgebildeten Förderbandes 21 gewährleistet ist. Anstelle von gleitenden Führungen oder anstelle von Führungsstiften können auch Führungsrollen an den Förderbändern vorgesehen sein, die dann auf entsprechend profilierten Führungsschienen abrollen.

Das Trägergestell 10 kann aus einem Rahmengestell bestehen; es besteht jedoch auch die Möglichkeit, das Trägergestell 10 vollwandig auszubilden. Ist das Trägergestell 10 vollwandig ausgebildet, dann kann es außen- oder innenseitig mittels einer Isolierschicht verkleidet sein, so daß auch temperaturempfindliche Güter, wie beispielsweise Bananen, gefördert werden können, da durch die Isolierschicht eine gleichbleibende Temperatur innerhalb des Förderers gegeben ist. In Fällen, wo eine Kühlung des Transportgutes erforderlich ist oder wo eine hohe Außentemperatur herrscht, kann das vollwandige Trägergestelle mit Kühlelementen zur Aufrechterhaltung von niedrigen Temperaturen innerhalb des Förderers versehen sein.

Die Länge des Trägergestells 10 mit dem wendelförmigen Förderer 20 richtet sich jeweils nach der erforderlichen Förderhöhe bzw. nach der Tiefe der Laderäume der zu beoder entladenden Schiffe. In Verbindung mit einem Auslegerarm ist dann das Trägergestell 10 mit seinem wendelförmigen Förderer 20 als Senkrechtförderer soweit in einen Laderaum einführbar, wie dies die Deckaufbauten des Schiffes erlauben.

Bei dem in Fig. 1 gezeigten Ausführungsbeispiel ist der zylindrische Tragstab 110 über das Trägergestell 10 mit einem Abschnitt hinaus verlängert. Der wendelförmige Förderer 20 ist bis in den Bereich des freien Endes 110a des Tragstabes 110 geführt. Das obenseitige Aufgabebzw. Abgabeende des Förderbandes 21 des wendelförmigen Förderers 20 ist bei 24 und das bodenseitige Aufgabeund Abgabeende bei 25 angedeutet.

Der an dem Tragstab 110 ein- und ausfahrbar gehaltene Tragstababschnitt 111 trägt einen um die Längsachse des Tragstabes 110 bzw. des Tragstabschnittes 111 verdrehbaren Tragkorb 30, dessen Durchmesser in etwa dem Durchmesser des Trägergestells 10 entspricht. Dieser Tragkorb 30 weist bodenseitig eine Tragplatte 31 auf, die unter Zwischenschaltung einer Kugeldrehverbindungseinrichtung, die in Fig. 1 bei 32 angedeutet ist, an einer an dem freien Ende 11a des Tragstababschnittes 111 befestigten Führungsplatte 112 derart gehalten ist, daß der Tragkorb 30 in Pfeilrichtung Y um den Tragstababschnitt 111 verdrehbar ist. Im obenseitigen Bereich ist der Tragkorb 30 offen ausgebildet. Der Tragkorb 30 kann, wie das Trägergestell 10, als Rahmengestell, jedoch auch vollwandig ausgebildet sein.

Der Tragkorb 30 ist mit dem ein- und ausfahrbaren Tragstababschnitt 111 feststellbar. Eine entsprechend ausgebildete Arretierungseinrichtung ist in Fig. 1 bei 33 angedeutet. Vermittels dieser Arretierungseinrichtung 33 ist ein Verdrehen des Tragkorbes 30 allein nicht mehr möglich. In dem Tragkorb 30 ist ein weiterer wendelförmiger Förderer 40 angeodnet, der aus einem Förderband 41 besteht, welches entsprechend dem Förderband 21 des Förderers 20 ausgebildet ist. Auch dieses Förderband 41 ist mit seinem oberen Trum 41a und seinem unteren Trum 41b wendelförmig um den Tragstababschnitt 111 geführt, jedoch an dem Tragkorb 30 gehalten. Hierzu sind die Leitrollen und Antriebstrommeln 42, 43, über die das Förderband 41 geführt ist, entsprechend der Wendelung des Förderbandes 41 an der Innenwand des Tragkorbes 30 freiliegend gelagert, wobei die Rollen 42, 43 in Richtung zu dem Tragstababschnitt 111 konisch verjüngt ausgebildet sind. Die Umlenkrollen, um die das Förderband 41 herumgeführt ist, sind als Antriebsrollen ausgebildet und stehen mit einem vorzugsweise an dem Tragkorb 30 vorgesehenen, in der Zeichnung nicht dargestellten Antriebsmotor in Verbindung, wobei die Drehrichtung des Antriebsmotors für die Antriebstrommeln für das Förderband 41 wechselbar ist, so daß das Förderband 41 in beiden Richtungen fördern kann. Auch im Falle des Förderers 40 kann anstelle eines über Leitrollen geführten Förderbandes 41 ein wendelförmig ausgebildeter Schleifgurt verwendet werden, der dann über in entsprechender Weise an dem Tragkorb 30 vorgesehene Führungsflächen geführt ist.

Die beiden Antriebseinrichtungen für den feststehenden Förderer 20 und den zusammen mit dem Tragkorb 30 verdrehbaren Förderer 40 stehen mit einer in der Zeichnung nicht dargestellten Steuereinrichtung in Verbindung, über die gewährleistet ist, daß die Antriebseinrichtungen jeweils so geschaltet sind, daß die Förderbänder 21, 41 der beiden Förderer 20, 40 gleichsinnig umlaufend sind.

Bei dem in Fig. 1 gezeigten Ausführungsbeispiel weist der Förderer 40 in dem Tragkorb 30 gegenüber dem feststehenden Förderer 20 eine kurze Wendellänge auf. Die Wendellänge des Förderers 40 kann jedoch beliebig gewählt sein. Die Länge des Tragkorbes 30 ist dann auf die Wendellänge des Förderers 40 abgestimmt.

Das obenseitige Aufgabe- bzw. Abgabeende des Förderbandes 41 des in dem Tragkorb 30 angeordneten Förderers 40 ist bei 44 und das bodenseitige Aufgabe- bzw. Abgabeende bei 45 angedeutet (Fig.1 und 2).

Nimmt das Förderband 41 mit seinem Tragkorb 30 die in Fig. 1 gezeigte Stellung ein, dann ist eine Abwärtsförderung in Pfeilrichtung Yl von oben nach unten dadurch möglich, daß das obenseitige Ende 44 des Förderbandes 41 unterhalb des bodenseitigen Endes 25 des Förderbandes 21 zu liegen kommt (Fig.3). Die beiden Förderbänder 21, 41 sind dann gleichsinnig in Pfeilrichtung Y1 umlaufend angetrieben.

Um Schüttgut oder Stückgut aufwärts fördern zu können, wird lediglich der Tragkorb 30 mit seinem Förderband 41 in Pfeilrichtung Y soweit um die Tragstablängsachse verschwenkt, bis das obenseitige Ende 44 des Förderbandes 41 das bodenseitige Ende 25 des Förderbandes 21 übergreift (Fig. 2 und 4). Sind dann die Förderbänder 21, 41 der beiden Förderer 20, 40 gleichsinnig in Pfeilrichtung Y2 umlaufend angetrieben, dann erfolgt ein Fördern des Transportgutes von unten nach oben.

Im Übergabebereich zwischen den beiden Förderbändern 21, 41 ist zwar eine Stufe ausgebildet, die jedoch die Anordnung zusätzlicher Uberleiteinrichtungen in diesem Bereich nicht erfordert, so daß sowohl bei einer Aufwärtsförderung als auch bei einer Abwärtsförderung bei entsprechender Verstellung des Förderbandes 41 zum Förderband 21 das zu transportierende Gut jeweils vom zu fördernden Förderband auf das jeweils abnehmende Förderband übergeben wird. Da der Umlenkungsbereich der einanderzugekehrten Enden 25, 45 der beiden Förderbänder 21, 41 sehr klein gehalten werden kann, ist nur ein geringfügiger Höhenunterschied zwischen den beiden übereinandergreifenden Förderbandenden vom Transportgut während der Aufwärtsförderung oder der Abwärtsförderung zu überwinden.

Wird der Tragkorb 30 mit dem Förderer 40 an dem einund ausfahrbaren Tragstababschnitt 111 festgestellt, dann besteht die Möglichkeit, den Tragkorb 30 mit seinem Förderer 40 in Pfeilrichtung Y3 anheben oder absenken zu können, so daß Höhenunterschiede im Laderaumbereich überwunden werden können.

## Patentansprüche

1. Vorrichtung zum Be- und Entladen, insbesondere von Schiffen mit Stück- und/oder Schüttgut, bestehend aus zwei in einem senkrechten Trägergestell (10) wendelförmig, als über Leitrollen (22, 23; 42, 43) geführte endlose Förderbänder (21, 41) ausgebildete und übereinanderliegend angeordnete Förderer (20, 40), von denen der eine Förderer (20) feststehend zwischen dem Trägergestell (10) und einem mittigen, zylindrischen Tragstab (110) angeordnet ist, während der andere Förderer (40) durch Drehen um die senkrechte Trägergestellängsachse ein- und ausfahrbar ausgebildet ist, wobei der um seine senkrechte Wendellängsachse verdrehbare Förderer (40) in einem unterhalb des Trägergestells (10) liegenden Tragkorb (30) angeordnet ist und für eine Aufwärtsbewegung mit seinem dem Ende (25) des Förderers (20) zugekehrten oberen Ende (44) abschnittsweise das untere Ende (25) des feststehenden Förderers (20) übergreift, dadurch gekennzeichnet, daß der Tragkorb (30) am bodenseitigen Ende (111a) eines im bodenseitigen Bereich (110a) des zylindrischen Tragstabes (110) des Trägergestells (10) gehaltenen, ein- und ausfahrbaren Tragstababschnittes (111) drehbar um die Tragstablängsachse gelagert ist und mit dem Förderer (40) vermittels einer Kugeldrehverbindungseinrichtung (32) an einer am bodenseitigen Ende (211a) des ein- und ausfahrbaren Tragstababschnittes (111) befestigten Führungsplatte (112) gehalten ist, und daß nach dem Verdrehen des Tragkorbes (30) um etwa 360° das obere Ende (44) des mit dem Tragkorb (30) zusammen verdrehbaren Förderers (40) unterhalb des unteren Endes (25) des feststehenden Förderers (20) für eine Abwärtsförderung liegt.

2. Vorrichtung nach Anspruch 1, dadurch gekennzeichnet, daß der Förderer (40) in dem Tragkorb (30) gegenüber dem feststehenden Förderer (20) eine kurze Wendellänge aufweist.

3. Vorrichtung nach Anspruch 1 und 2, dadurch gekennzeichnet, daß der senkrechte Tragstab (110) des Trägergestells (10) mit einem Abschnitt über das Trägergestell (10) hinaus verlängert ausgebildet ist, und daß der feststehende Förderer (20) bis zum freien Ende (110a) des Tragstabes (110) geführt ist.

4. Vorrichtung nach Anspruch 1 bis 3, dadurch gekennzeichnet, daß der Tragkorb (30) mit dem ein- und ausfahrbaren Tragstababschnitt (111) feststellbar ausgebildet ist.

## Claims

1. Device for loading and unloading, particularly for vessels with lump and/or bulk materials, comprising two conveyors (20, 40) arranged in a vertical carrier stand (10) in the form of a helix and as endless conveyor belts (21, 41), which are led over guiding rollers (22, 23; 42, 43) lying upon another, one conveyor (20) firmly being arranged between the carrier stand (10) and a central and cylindrical carrier rod (110), whereas the other conveyor (40) is retractable and extensible by turning it around the vertical longitudinal axis of the carrier stand, the conveyor (40) turning around its vertical longitudinal helical axis being arranged carrying basket (30), which is located under the carrier stand (10) and, for an upward movement, overlaps by sections the bottom end (25) of the fixed conveyor (20) with its upper end (44) directed towards the end (25) of the conveyor (20), characterized in that the carrying basket (30) is pivoted around the longitudinal axis of the carrier rod it the bottom end (111a) of a section of the retractable and extensible carrier rod (111), which is held in the bottom area (110a) of the cylindrical carrier rod (110) of the carrier stand (10), and held with the carrier (40) at a guiding plate (112) by means of a ball bearing sleving rim device (32), the guiding plate being fixed at the bottom end (211a) of the retractable and extensible section of the carrier rod (111), and that after a rotation of the carrying basket (30) through 360° the upper end (44) of the conveyor (40) turning together with the carrying basket (30) lies under the bottom end (25) of the fixed conveyor (20) for the downward movement.

2. Device according to claim 1, characterized in that the conveyor (40) shows a short helix length in the carrying basket (30) as compared to the helix length in the fixed conveyor ((20).

3. Device according to claims 1 and 2, characterized in that the vertical carrier rod (110) of the carrier stand (10) is elongated by one section over the carrier stand (10) and that the fixed conveyor (20) goes up to the free end (110a) of the carrier rod (110).

4. Device according to claims 1 to 3, characterized in that the carrying basket (30) can be locked with the retractable and extensible section of the carrier rod (111).

## Revendications

1. Dispositif pour charger et décharger, notamment des bateaux avec des matières en morceaux et/ou en vrac, consistant en deux transporteurs (20, 40) superposés, constitués comme des bandes transporteuses (21, 41) sans fin de forme hélicoïdale dans un cadre porteur vertical (10) guidées par des poulies de guidage (22, 23; 42, 43), l'un des transporteurs (20) étant placé de manière fixe entre le cadre porteur (10) et une barre de support (110) cylindrique centrée, tandis que l'autre transporteur (40) est formé de manière à être amovible par rotation autour de l'axe longitudinal vertical du cadre porteur, le transporteur (40) pouvant tourner autour de son axe longitudinal hélicoïdal étant placé dans une cage porteuse (30) située en-dessous du cadre porteur (10) et recouvrant, pour le mouvement ascendant, l'extrémité inférieure (25) du transporteur fixe (20) par segments avec son extrémité supérieure (44) tournée vers l'extrémité (26) du transporteur (20), caractérisé en ce que la cage porteuse (30) est positionnée de manière rotative autour de l'axe longitudinal de la barre de support à l'extrémité tournée vers le fond (111a) d'une portion de la barre de support qui est amovible (111) et qui est maintenue dans la zone du fond (110a) de la barre cylindrique de support (110) du cadre porteur (10) et qu'elle est fixée au transporteur (40) au moyen d'un dispositif à couronne pivotante à billes (32) se trouvant sur une plaque de guidage (112) fixée à l'extrémité située du côté du fond (111a) de la section de la barre de support amovible (111) et que, après que la cage porteuse (30) ait effectué une rotation d'environ 360°, l'extrémité supérieure (44) du transporteur (40) rotatif en liaison avec la cage porteuse (30) se trouve en-dessous de l'extrémité inférieure (25) du transporteur fixe (20) pour le mouvement descendant.

2. Dispositif selon la revendication 1, caractérisé en ce que le transporteur (40) situé dans la cage porteuse (30) en face du transporteur fixe (20) présente une hélice de faible longueur.

3. Dispositif selon la revendication 1 ou 2, caractérisé en ce que la barre de support verticale (110) du cadre porteur (10) est formée avec une section qui se prolonge au-delà du cadre porteur (10) et que le transporteur fixe (20) est guidé jusqu'à l'extrémité libre (110a) de la barre de support (110).

4. Dispositif selon les revendications 1 à 3, caractérisé en ce que la cage porteuse (30) est formée de manière à pouvoir être bloquée avec la section mobile de la barre de support (111).

FIG.1

FIG. 2

FIG.3

FIG.4